(19) Europäisches Patentamt

European Patent Office

Office européen des brevets

(11) Veröffentlichungsnummer: **0 345 253 B1**

(12) **EUROPÄISCHE PATENTSCHRIFT**

(45) Veröffentlichungstag der Patentschrift: **26.08.92**

(21) Anmeldenummer: **87906567.0**

(22) Anmeldetag: **10.10.87**

(86) Internationale Anmeldenummer:
**PCT/DE87/00463**

(87) Internationale Veröffentlichungsnummer:
**WO 88/04605 (30.06.88 88/14)**

(51) Int. Cl.⁵: **B29C 45/17**

(54) **VERFAHREN ZUM AUSBAU DER SCHNECKE AUS DEM SCHNECKENZYLINDER EINER SCHNECKEN-SPRITZGIESSMASCHINE UND DEMENTSPRECHEND GESTALTETE SCHNECKEN-SPRITZGIESSMASCHINE.**

(30) Priorität: **22.12.86 DE 3643884**

(43) Veröffentlichungstag der Anmeldung:
**13.12.89 Patentblatt 89/50**

(45) Bekanntmachung des Hinweises auf die Patenterteilung:
**26.08.92 Patentblatt 92/35**

(84) Benannte Vertragsstaaten:
**AT CH DE FR GB IT LI NL**

(56) Entgegenhaltungen:
**FR-A- 2 291 848**
**US-A- 3 101 512**
**US-A- 4 384 395**

**Kunststoffe, Band 61, Nr.6, Juni 1971, (München, DE), e. Sauerbruch : "Aufbau und Funktion einer neuartigen Spritzgiessmaschine", Seiten 417-418**

(73) Patentinhaber: **MANNESMANN Aktiengesellschaft**
**Mannesmannufer 2**
**W-4000 Düsseldorf 1(DE)**

(72) Erfinder: **HAFNER, Alfred**
**Cuxhavener Str. 86**
**W-8501 Fürth(DE)**
Erfinder: **WÜRL, Ernst**
**Am Geigenfeld 29**
**W-8831 Höttingen(DE)**
Erfinder: **PAULSEN, Jürgen**
**Holzgartenstr. 49**
**W-8500 Nürnberg(DE)**
Erfinder: **MARIENFELD, Peter**
**Margaretenstr. 6**
**W-8562 Hersbruck(DE)**
Erfinder: **GRÖGOR, Bruno**
**Bergstr. 12**
**W-8566 Leinburg(DE)**

EP 0 345 253 B1

**Patent Abstracts of Japan, Band 9, Nr. 319
(M439) (2042), 14.Dezember 1985, &
JP,A,60154026 (MEIKI SEISAKUSHO K.K.)
13.August 1985**

(74) Vertreter: **Lohrentz, Franz, Dipl.-Ing.
Ferdinand-Maria-Strasse 12
W-8130 Starnberg(DE)**

**Beschreibung**

Die Erfindung betrifft ein Verfahren zum Ausbau der Schnecke aus dem Schneckenzylinder einer Schnecken-Spritzgießmaschine, bei dem die Antriebsvorrichtung für die Schnecke von dem hinteren Ende des Schneckenzylinders gelöst und die Schnecke nach hinten aus dem geöffneten Schneckenzylinder herausgezogen wird. Weiterhin betrifft die Erfindung eine SchneckenSpritzgießmaschine mit den Merkmalen gemäß dem Oberbegriff des Patentanspruches 2, die zur Durchführung dieses Ausbauverfahrens entsprechend gestaltet ist. Schließlich befasst sich die Erfindung mit einer Hilfsvorrichtung zur Durchführung des Verfahrens.

Der Ausbau der Schnecke einer Schnecken-Spritzgießmaschine ist eine Maßnahme, die im Betrieb immer wieder zu Servicezwecken, zum Zweck des Austausches der Schnecke gegen eine solche mit anderer Geometrie oder Grösse und auch zur Beseitigung von Schäden vorgenommen werden muß. Um diesen Ausbau für den Anwender möglichst einfach zu gestalten, muß die Schneckenspritzgießmaschine bereits dafür konstruktiv ausgebildet sein. Die gebräuchlichste Vorgangsweise beim Ausbau der Schnecke sieht eine Verschwenkung der kompletten Einspritzeinheit, bestehend aus dem Schneckenzylinder mit der darin befindlichen Schnecke und der hinter dem Schneckenzylinder angeordneten Antriebsvorrichtung für die Schnecke, um eine etwa in Längsmitte der Einspritzeinheit liegende vertikale Schwenkachse vor. Die Verschwenkung erfolgt so, daß das vordere Ende des Schneckenzylinders (Spritzende) zur Bedienungsseite der Spritzgießmaschine hin weist und zum Zweck der Abnahme des Zylinderkopfes zugänglich ist. Durch Betätigung der Antriebsvorrichtung für den Axialhub der Schnecke, z.B. des hydraulischen Spritzzylinders, kann die Schnecke durch das offene Zylinderende nach vorne ausgedrückt und anschließend herausgezogen werden. Diese Vorgangsweise erfordert jedoch schon bei Spritzgießmaschinen mittlerer Grösse infolge des Schwenkweges der gesamten Einspritzeinheit nach der Seite hin verhältnismässig viel Platz und bedarf bei grösseren Spritzgießmaschinen, deren Einspritzeinheit bereits ein Gewicht von mehreren Tonnen hat, sehr grosser Schwenkkräfte, die nur durch einen hierfür eigens vorgesehenen Antrieb aufgebracht werden können. Dieser Antrieb bedeutet einen zusätzlichen konstruktiven und - falls er aus Platzersparnisgründen vor dem Schneckenausbau erst montiert werden muß - zeitlichen Aufwand. Hinzu kommt, daß der Ausbau der Schnecke nach vorne durch den Schneckenzylinder hindurch nur dann möglich ist, wenn der Durchmesser des Antriebsendes der Schnecke, das in der Regel mit einer Keilverzahnung versehen ist, dies gestattet.

Im Hinblick auf die zu übertragenden Drehmomente müsste aber die Keilverzahnung häufig im Durchmesser grösser als der lichte Innendurchmesser des Schneckenzylinders ausgelegt werden, so daß bezüglich der Belastbarkeit der Keilverzahnung ein an sich unerwünschter Kompromiß getroffen werden muß, wenn der Schneckenausbau in der geschilderten Weise ermöglicht werden soll.

Aus der FR-A 22 91 848 ist auch bereits ein Verfahren zum Schneckenausbau bekannt, bei dem die Schnecke nach hinten aus dem Schneckenzylinder herausgezogen wird, so daß ein Abbau des Zylinderkopfes und auch eine Verschwenkung der gesamten Einspritzeinheit nicht erforderlich sind. Zu diesem Zweck ist zwischen der Antriebsvorrichtung und der Schnecke eine ausrückbare Zwischenwelle vorgesehen und der Schneckenzylinder ist horizontal um eine Schwenkachse verschwenkbar, die im wesentlichen mit der Lage des Einfülltrichters am hinteren Ende des Schneckenzylinders zusammenfällt. Hierdurch besteht jedoch ein verhältnismässig grosser seitlicher Platzbedarf bei der Verschwenkung des Schneckenzylinders, bis das hintere Schneckenende zugänglich ist. Außerdem ist bei Schneckenzylindern von grossen Spritzgießmaschinen, die eine erhebliche Länge und ein erhebliches Gewicht aufweisen, beim Ausschwenken des Schneckenzylinders für diesen eine gesonderte Abstützvorrichtung erforderlich, um Beschädigungen des Schneckenzylinders zu vermeiden.

Der Erfindung liegt deshalb die Aufgabe zugrunde, ein Verfahren zum Ausbau der Schnecke zu schaffen und eine entsprechende Gestaltung einer Schnecken-Spritzgießmaschine vorzuschlagen, die einen geringeren Platzbedarf und eine erheblich leichtere Handhabung bei verringertem konstruktivem Aufwand ermöglichen.

Zur Lösung dieser Aufgabe schlägt die Erfindung ein Verfahren gemäß dem Kennzeichen des Patentanspruches 1 sowie eine Schnecken-Spritzgießmaschine gemäß dem Kennzeichen des Patentanspruches 2 vor.

Das erfindungsgemässe Verfahren geht von dem bekannten Schneckenausbauverfahren aus, bei dem die Schnecke nach hinten aus dem Schneckenzylinder herausgezogen wird. Dabei wird zunächst - durch das Antriebsaggregat selbst - entweder das Antriebsaggregat oder der Schneckenzylinder oder beide Komponenten getrennt axial verschoben bis das hintere Schneckenende aus dem Antriebsaggregat freigekommen ist. Daraufhin wird der Schneckenzylinder um eine vor seinem hinteren Ende verlaufende vertikale Schwenkachse soweit verschwenkt, bis sein hinteres Ende auf der Bedienungsseite der Spritzgießmaschine zugänglich ist. Dadurch, daß nur der Schneckenzylinder selbst verschwenkt wird, wobei die Schwenkachse im Bereich von dessen Längsmitte angeordnet ist, wird der seitliche Schwenkweg und damit der Platzbedarf verringert. Da außerdem das schwere Antriebsaggregat überhaupt nicht verschwenkt werden muß, bedarf es erheblich kleinerer Kräfte, um die Verschwenkung herbeizuführen. Dies kann selbst bei verhältnismässig grossen Maschinen noch von Hand ausgeführt werden. Eine zusätzliche Abstützvorrichtung für den Schneckenzylinder im ausgeschwenkten Zustand ist ebenfalls nicht erforderlich.

Zur Durchführung des Verfahrens ist eine Spritzgießmaschine erfindungsgemäß so gestaltet, daß der Schneckenzylinder mit der Antriebsvorrichtung lösbar verbunden ist und die Antriebsvorrichtung oder der Schneckenzylinder - jeweils unabhängig voneinander - auf einem Schlitten gelagert ist. Dieser Schlitten ermöglicht nach dem Lösen der Verbindung eine getrennte Verschiebung in Achsrichtung des Schneckenzylinders einer der beiden Komponenten der Einspritzeinheit um ein Ausmaß, das durch die Tiefe des Eingriffs des hinteren Schneckenendes in die Antriebsvorrichtung bestimmt ist. Um dieses Ausmaß kann in beiden Fällen die Verschiebung durch das Antriebsaggregat selbst herbeigeführt werden, indem beispielsweise durch Betätigung des Spritzzylinders der Schneckenzylinder (ausgehend von seiner hintersten Stellung relativ zum Gießwerkzeug) axial nach vorne weggeschoben wird. Bei dieser bevorzugten Ausführungsform braucht die Antriebsvorrichtung nur längsverschiebbar auf den Holmen des Grundrahmens angeordnet zu sein, die üblicherweise die Verstellung der Einspritzeinheit relativ zum Gießwerkzeug ermöglichen, so daß im Unterschied zu der eingangs beschriebenen Vorgangsweise, bei der die gesamte Einspritzeinheit verschwenkt wird, die Versorgungsleitungen für die Antriebsvorrichtung ohne Rücksicht auf die Gefahr einer Verdrillung bemessen werden können.

Der Schlitten zur Lagerung des Schneckenzylinders oder der Antriebsvorrichtung kann prinzipiell auf den gleichen Holmen verfahrbar sein, auf denen beim bestimmungsgemässen Betrieb der Spritzgießmaschine die gesamte Einspritzeinheit längsverfahren wird, um das Spritzende des Schneckenzylinders an das Gießwerkzeug heranzubringen. Bevorzugt ist jedoch eine Ausführung, gemäß der der Schlitten auf eigenen Längsschienen verfahrbar ist, da hierdurch eine grössere Freiheit bezüglich der Bemessung des Verschiebeweges zwischen Antriebsvorrichtung und Schneckenzylinder erzielt wird. In dem hier bevorzugten Fall, daß der Schneckenzylinder auf dem Schlitten gelagert und mit diesem axial verschiebbar ist, ist es auch zweckmässig, die Schwenklagerung für den Schneckenzylinder auf dem Schlitten auszubilden. Prinzipiell wäre es allerdings auch möglich, den Schlitten selbst nach Art einer Drehscheibe horizontal verschwenkbar zu gestalten.

Weitere vorteilhafte Ausgestaltungen der Spritzgießmaschine ergeben sich aus den Unteransprüchen. Die nachfolgende Beschreibung erläutert ein Ausführungsbeispiel der Erfindung.

In den Zeichnungen zeichen:

Fig. 1   eine schematische Seitenansicht der Einspritzeinheit einer Spritzgießmaschine nach der Erfindung;

Fig. 2   einen Querschnitt längs der Linie II-II in Fig. 1;

Fig. 3   einen Querschnitt längs der Linie III-III in Fig. 1;

Fig. 4   eine Draufsicht auf die Einspritzeinheit, teilweise geschnitten, wobei der Schneckenzylinder teilweise in ausgeschwenkter Lage dargestellt ist;

Fig. 5   eine perspektivische Ansicht der Einspritzeinheit in deren Betriebsstellung;

Fig. 6   eine zu Fig. 5 analoge perspektivische Darstellung, die den Schneckenzylinder in teilweise ausgeschwenktem Zustand zeigt, in welchem das hintere Schneckenende zugänglich ist;

Fig. 7   eine schematische Seitenansicht der Einspritzeinheit und einer an der Spritzgießmaschine angebauten Hilfsvorrichtung zum Herausziehen der Schnecke, und

Fig. 8   einen Querschnitt durch die Hilfsvorrichtung längs der Linie VIII-VIII in Fig. 7.

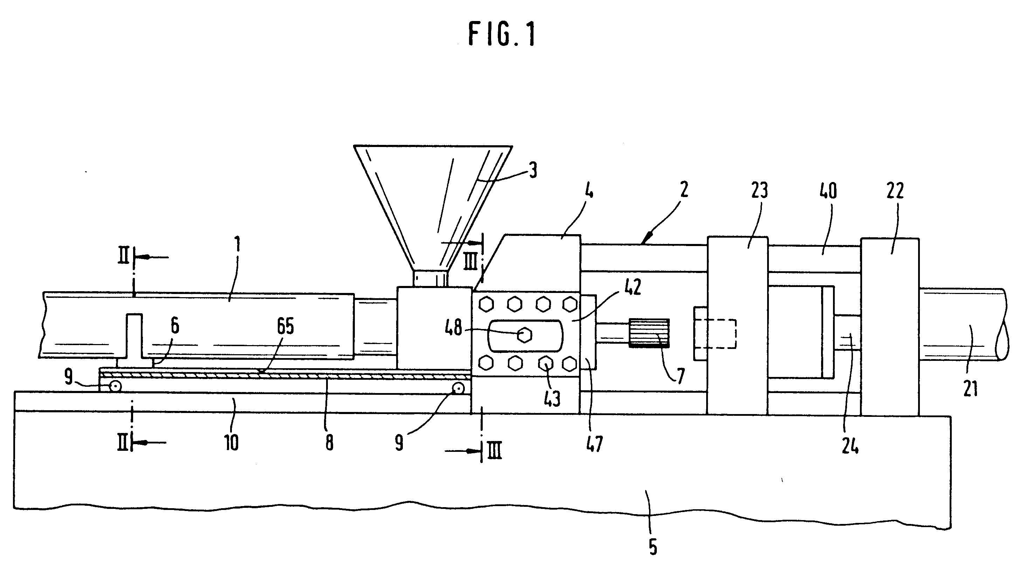

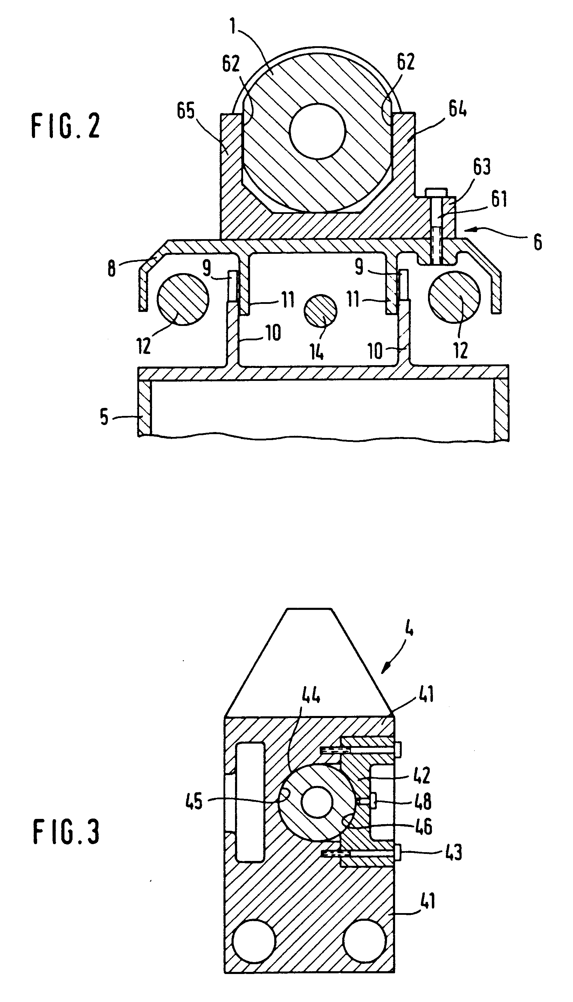

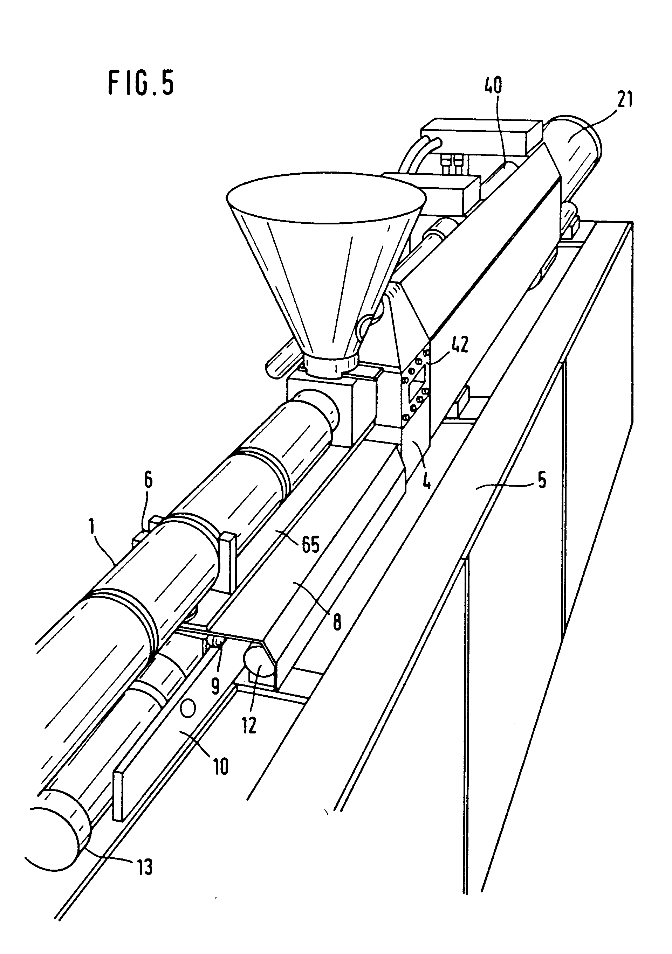

Die in Fig. 1 gezeigte Einspritzeinheit weist einen Schneckenzylinder 1, eine Antriebsvorrichtung 2 für die im Schneckenzylinder 1 drehbar und axial verschiebbar gelagerte, nicht gezeigte Schnecke, einen Fülltrichter 3 zur Zuführung von Kunststoff-Rohmaterial in den Schneckenzylinder 1 und ein Verbindungsteil 4 auf, durch das der Schneckenzylinder 1 mit der Antriebsvorrichtung 2 verbunden ist. Die Antriebsvorrichtung 2, die in bekannter Weise die Drehung und axiale Verschiebung der Schnecke bewirkt und deshalb bezüglich ihrer Funktionsweise und ihres inneren Aufbaues keiner besonderen Erläuterung bedarf, ist auf Holmen 12 (vgl. Fig. 2 und 5) des Grundrahmens 5 der Spritzgießmaschine verschiebbar. Diese Verschiebung ermöglicht es in bekannter Weise, die gesamte Einspritzeinheit an das nicht gezeigte Gießwerkzeug heranzufahren bzw. davon zurückzuziehen. Der zu der Antriebsvorrichtung 2 gehörende hydraulische Spritzzylinder 21 ist an einer Endplatte 22 befestigt, die über nicht gezeigte Gleitbüchsen ebenfalls auf den Holmen 12 verschiebbar ist. Dies gilt auch für das Verbindungsteil 4, das mittels eines Holmenrahmens 40, der aus zwei vertikal übereinander angeordneten parallelen Holmen gebildet ist, mit der Endplatte 22 des Spritzzylinders 21 eine starre Einheit bildet. Auf dem Holmenrahmen 40 ist das Getriebegehäuse 23, welches den Drehantrieb der Antriebsvorrichtung 2 aufnimmt, um einen Weg verschiebbar, der angenähert dem Spritzhub der Schnecke entspricht. Das Getriebegehäuse 23 ist mit der Kolbenstange 24 des Spritzzylinders 21 verbunden und führt daher im Betrieb der Spritzgießmaschine die Axialbewegungen der Schnecke mit aus.

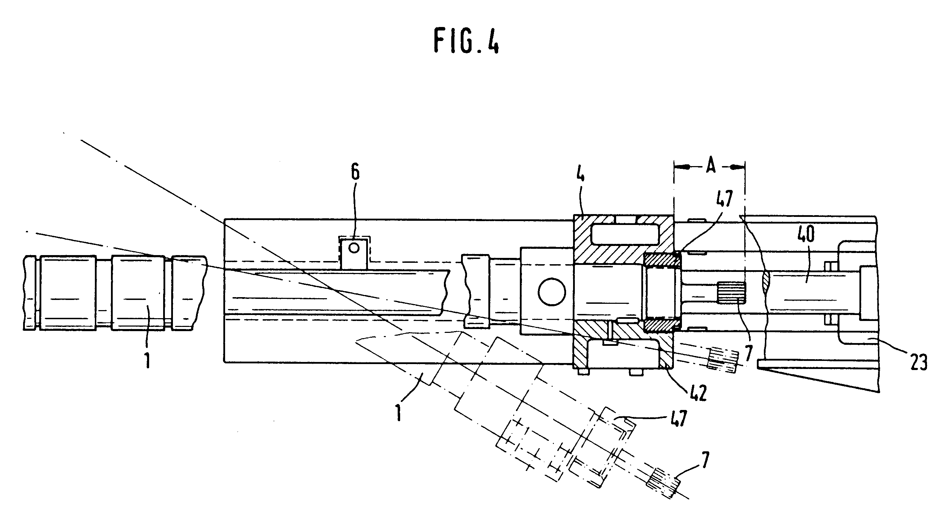

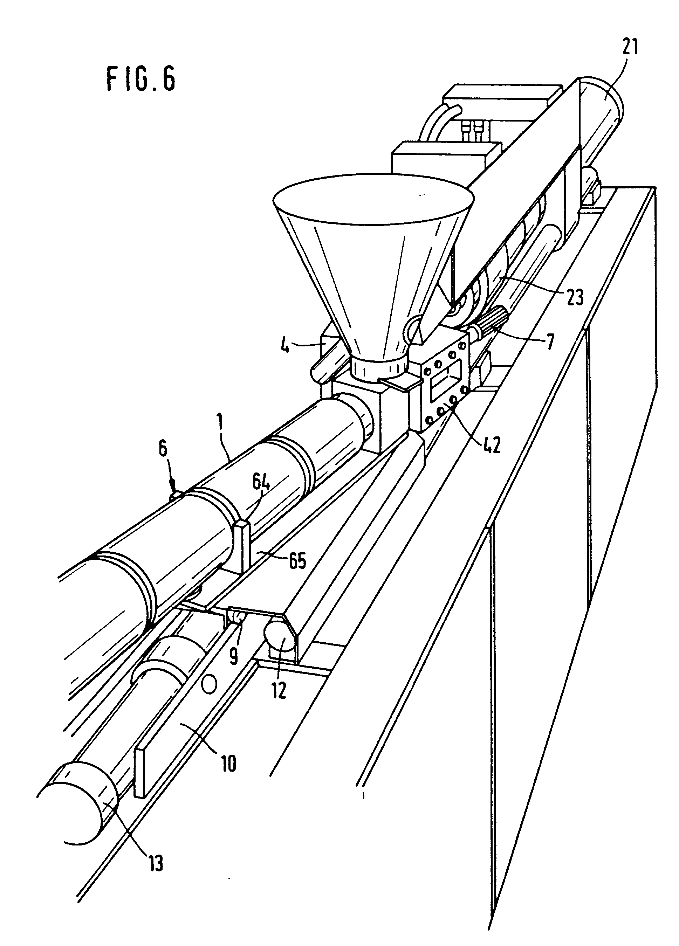

Wie aus den Fig. 4 und 6 hervorgeht, weist die Schnecke ein hinteres Schneckenende auf, das aus dem Verbindungsteil 4 um das Maß A nach hinten heraussteht und mit einer Keilverzahnung 7 versehen ist. In der in den Fig. 1 und 5 gezeigten Betriebsstellung der Einspritzeinheit steht die Keilverzahnung 7 mit einer nicht gezeigten Hohlwelle in dem Getriebegehäuse 23 so im Eingriff, daß sie durch eine axiale Verschiebung davon gelöst werden kann. Das Verbindungsteil 4 ist, wie aus den Fig. 3 und 4 hervorgeht, ein kastenförmiges Gußteil von im wesentlichen U-förmiger Gestalt. Die Innenseiten der U-Schenkel 41, die horizontal liegen und eine zur Bedienungsseite der Spritzgießmaschine hin gewendete Öffnung des Verbindungsteils 4 begrenzen, bilden je eine Anlagefläche für einen in die Öffnung einzusetzenden Spanndeckel 42, der mittels Schrauben 43 gegen die Rückwand 44 der Öffnung verspannt werden kann. Die Rückwand 44 sowie die Innenseite des Spanndeckels 42 weisen jeweils eine teilzylindrische Ausnehmung 45 bzw. 46 auf, die in ihrer Form komplementär dem hinteren Ende des Schneckenzylinders 1 entspricht, so daß dieses im Einbauzustand fest in dem Verbindungsteil 4 gehalten ist. Wie aus Fig. 4 weiterhin hervorgeht, sind die teilzylindrischen Ausnehmungen 45, 46 in ihrem hinteren Endbereich auf einen grösseren Durchmesser abgesetzt, um eine Mutter 47 aufnehmen zu können, die auf das hintere Ende des Schneckenzylinders 1 aufgeschraubt ist. Diese Mutter dient zur axialen Abstützung des Schnekkenzylinders 1 gegenüber den beim Spritzhub von dem Spritzzylinder 21 ausgeübten Kräften.

Neben seiner Abstützung in dem Verbindungsteil 4 ist der Schneckenzylinder 1 über ein Schwenklager 6 auf einem Schlitten oder Wagen 8 gelagert, der mittels Laufrollen 9 auf einem Schienenpaar 10 des Grundrahmens 5 in Achsrichtung des Schneckenzylinders 1 in dessen Betriebsstellung verfahrbar ist. Die Laufrollen 9 sind an nach unten vorspringenden Längsrippen 11 des Schlittens 8 so gelagert, daß die Längsrippen 11 über die Laufrollen 9 nach unten vorstehen und eine seitliche Führung des Schlittens 8 an den Schienen 10 bewirken. Die Schienen 10 sind jeweils zwischen einem der Holme 12 und einem hydraulischen Zylinder 13 mit Kolbenstange 14 (vgl. Fig. 2 und 5) angeordnet, durch den die gesamte Einspritzeinheit relativ zu dem nicht gezeigten Gießwerkzeug verschoben werden kann und der fest mit dem Grundrahmen 5 der Spritzgießmaschine verbunden ist.

Der Schlitten 8 trägt an seiner von der Bedienungsseite der Spritzgießmaschine abgewendeten Längsseite einen vertikal nach oben stehenden festen Lagerzapfen 61, der einen Teil des Schwenklagers 6 bildet und hierzu in eine Bohrung eines Lageransatzes 63 an einer Montageplatte 65 hineinragt. Die Montageplatte 65 umgreift mit einer vertikal stehenden Gabel 64 zwei gegenüberliegende parallele Abflachungen 62 in einer Ringnut des Schneckenzylinders 1 und ist auf der horizontalen Oberfläche des Schlittens 8, auf dieser aufliegend, verschwenkbar gelagert. Die Montageplatte 65 dient zur Abstützung des Schneckenzylinders 1.

Das erfindungsgemässe Verfahren zum Schneckenausbau läuft bei dem geschilderten Ausführungsbeispiel der Spritzgießmaschine folgendermassen ab:

Zunächst wird eine zwischen dem Schneckenende und dem Getriebegehäuse 23 ggf. vorhandene Axialverbindung gelöst. Die Lösung der ggf. vorhandenen Verbindung erfolgt in einem Zustand, in welchem das Getriebegehäuse 23 von dem Verbindungsteil 4 nach hinten weg verfahren ist, so daß die Verbindungsstelle zugänglich ist. Nunmehr wird durch den Spritzkolben 21 das Getriebegehäuse 23 und damit auch die Schnecke in deren vorderste Endstellung verbracht, so daß das hintere Schneckenende mit dem kleinstmöglichen Betrag A in das Getriebegehäuse 23 hineinragt. Durch erneutes Zurückfahren des Getriebegehäuses 23 mittels des Spritzzylinders 21 wird das Getriebegehäuse jetzt von dem hinteren Schneckenende abgezogen, weil die Reibkräfte, mit denen die Schnecke im Schneckenzylinder 1 gehalten ist, diejenigen Reibkräfte bei weitem überwiegen, die zwischen der Keilwelle 7 und der mit ihr in Eingriff befindlichen Hohlwelle herrschen.*Nachdem das hintere Schneckenende ganz aus dem Getriebegehäuse ausgetreten ist, kann die Verschraubung 43 des Spanndeckels 42 gelöst werden, so daß das hintere Ende des Schneckenzylinders 1 nicht mehr in dem Verbindungsteil 4 festgehalten ist. Der Spanndeckel 42 ist durch eine Schraube 48 am Schneckenzylinder 1 fixiert, so daß er zusammen mit diesem jetzt seitlich, d.h. zur Bedienungsseite

*(Dieser Zustand ist in Fig. 1 gezeigt).

hin*, herausgeschwenkt werden kann, wie dies in den Fig. 4 und 5 dargestellt ist. Der Schwenkweg kann verhältnismässig gering sein, da es ausreichend ist, wenn das hintere Schneckenende mit der Keilverzahnung 7 von Hand erfassbar ist, so daß die Schnecke aus dem Schneckenzylinder 1 herausgezogen werden kann.

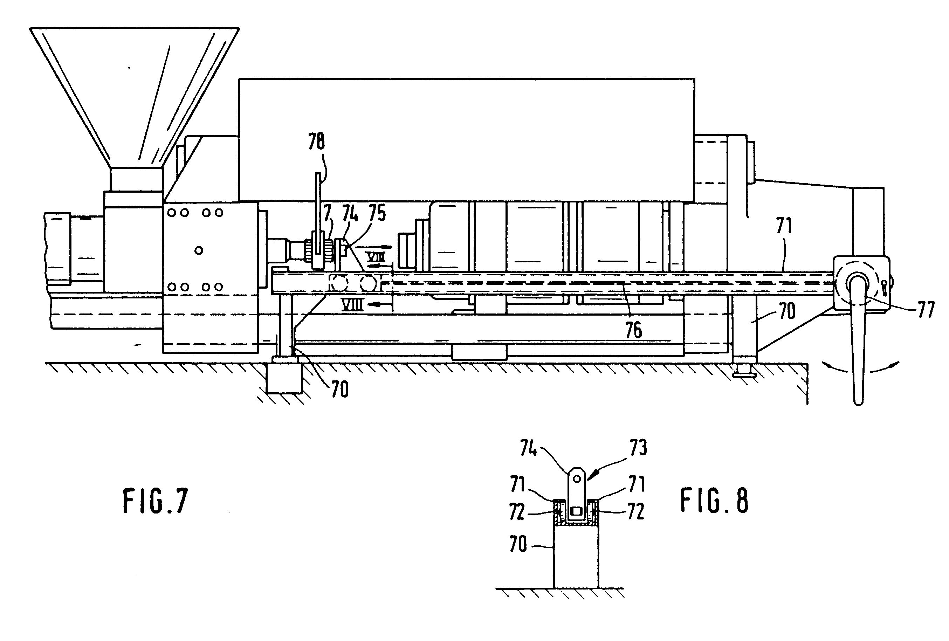

Da in der Regel beim Schneckenausbau sich im Schneckenzylinder 1 Kunststoff befindet, lässt sich der Ausbau nur in einem Zustand durchführen, bei dem der Kunststoff weitgehend flüssig ist, d.h. der Schneckenzylinder 1 und die Schnecke müssen beim Ausbau beheizt sein. Aus diesem Grund und auch aufgrund des bei grösseren Spritzgießmaschinen beträchtlichen Gewichts der Schnecke ist deren rein manueller Ausbau unzweckmässig. Im Rahmen des erfindungsgemässen Verfahrens findet deshalb eine in den Fig. 7 und 8 dargestellte Hilfsvorrichtung zum Ausziehen der Schnecke Anwendung. Diese Hilfsvorrichtung weist ein aus zwei Stützen 70 und zwei parallel zueinander angeordneten Längsträgern 71 gebildetes Gestell auf, das mittels der Stützen 70 auf dem Grundrahmen 5 der Spritzgießmaschine befestigt, z.B. angeschraubt oder festgeklemmt, werden kann. Die Befestigung erfolgt in einer Lage, daß das vordere Ende der Längsträger 71 sich unterhalb der jetzt freiliegenden Keilverzahnung der Schnecke befindet und die Längsträger außerdem parallel zu der - jetzt schräg verlaufenden - Längsachse des Schneckenzylinders 1 liegen. Die Längsträger 71 haben ein U-Profil und sind mit ihren Schenkeln einander zugewendet (Fig. 8). Die unteren Schenkel bilden Laufbahnen für Rollen 72 einer Verbindungsvorrichtung 73, die im wesentlichen aus einem hochstehenden Winkel 74 mit einem Schraubenloch besteht. Durch das Schraubenloch kann eine Befestigungsschraube 75 hindurchgesteckt und in eine Gewindebohrung am hinteren Schneckenende eingeschraubt werden (Fig. 7). Die Verbindungsvorrichtung 73 ist über ein Zugmittel 76, beispielsweise ein Drahtseil oder eine Zugkette, mit einer am hinteren Ende der Längsträger 71 befestigten handbetätigten Winde 77 verbunden. Nach dem Einschrauben der Schraube 75 in das Schneckenende kann durch Betätigung der Winde 77 die Schnecke aus dem Schneckenzylinder 1 herausgezogen werden, wobei sie mit zunehmender Auszugslänge auf der Oberseite der Längsträger 71, die hierfür eine Auflagefläche bilden, zur Auflage kommt. Das Ausziehen der Schnecke kann durch ein auf die Keilverzahnung 7 aufgestecktes Werkzeug 78 unterstützt werden, indem Hin- und Her-Drehbewegungen der Schnecke ausgeführt werden.

**Patentansprüche**

*zusammen mit der Montageplatte 65 um das Schwenklager 6

1. Verfahren zum Ausbau der Schnecke aus dem Schneckenzylinder (1) einer Schnecken-Spritzgießmaschine, die eine hinter dem Schneckenzylinder (1) angeordnete Antriebsvorrichtung (2) für eine Axialverschiebung und eine Drehung der Schnecke aufweist, bei dem der Schneckenzylinder (1) von der Antriebsvorrichtung (2) gelöst wird, der Schneckenzylinder (1) und die Antriebsvorrichtung (5) relativ zueinander um eine vorbestimmte Strecke (A) axial verschoben werden, bis das hintere Ende der Schnecke aus der Antriebsvorrichtung (2) freigekommen ist, und daraufhin der Schneckenzylinder (1) um eine vertikale Schwenkachse soweit verschwenkt wird, bis die Schnecke nach hinten herausgezogen werden kann, dadurch gekennzeichnet, daß die Verschwenkung des Schneckenzylinders (1) um eine angenähert in Längsmitte des Schneckenzylinders (1) befindliche Schwenkachse erfolgt.

2. Schnecken-Spritzgießmaschine mit einem Grundrahmen (5) zur Aufnahme einer Einspritzeinheit, die einen Schneckenzylinder (1), eine in dem Schneckenzylinder drehbare und axial verschiebbare Schnecke und eine axial hinter dem Schneckenzylinder (1) angeordnete Antriebsvorrichtung (2) für die Schnecke aufweist, bei der der Schneckenzylinder (1) lösbar mit der Antriebsvorrichtung (2) verbunden ist, der Schneckenzylinder (1) und die Antriebsvorrichtung (2) relativ zueinander axial verschiebbar auf dem Grundrahmen (5, 12) angeordnet sind und der Schneckenzylinder (1) mittels einer Schwenklagerung (6) gelagert ist, die eine Verschwenkung des Schneckenzylinders (1) um eine vertikale Schwenkachse so weit erlaubt, bis das hintere Schneckenende zugänglich ist und die Schnecke nach hinten aus dem Schneckenzylinder (1) herausgezogen werden kann, dadurch gekennzeichnet, daß die von der Schwenklagerung (6) gebildete vertikale Schwenkachse etwa in der Längsmitte des Schneckenzylinders (1) und gegenüber der Längsachse des Schneckenzylinders seitlich versetzt verläuft und daß das hintere Ende des Schneckenzylinders mit der Antriebsvorrichtung (2) und/oder mit dem Grundrahmen (5, 12) über ein Verbindungsteil (4) verbunden ist, das eine seitlich verschließbare Öffnung aufweist.

3. Spritzgießmaschine nach Anspruch 2,

dadurch gekennzeichnet,
daß der Schneckenzylinder auf einem Schlitten gelagert ist, der um eine Schwenklagerung verschwenkbar ist.

4. Spritzgießmaschine nach Anspruch 2 oder 3, dadurch gekennzeichnet,
daß die Schwenklagerung (6) eine nach oben offene gabelförmige Aufnahme (64) für den Schneckenzylinder (1) umfasst.

5. Spritzgießmaschine nach einem der Ansprüche 3 und 4,
dadurch gekennzeichnet,
daß der Schlitten (8) auf eigenen Längsschienen (10) verfahrbar ist.

6. Spritzgießmaschine nach einem der Ansprüche 3 bis 5,
dadurch gekennzeichnet,
daß der Schneckenzylinder (1) auf einer Montageplatte (65) gelagert ist, die mit dem Schlitten (8) durch die Schwenklagerung (6) schwenkbar verbunden ist.

7. Spritzgießmaschine nach einem der Ansprüche 2 bis 6,
dadurch gekennzeichnet,
daß das Verbindungsteil (4) mit einem Spritzzylinder (21) der Antriebsvorrichtung (2) eine starre Führungseinheit mit Gleitflächen (40) bildet, auf denen ein Getriebegehäuse (23) der Antriebsvorrichtung (2) durch den Spritzzylinder (21) in Achsrichtung des Schneckenzylinders (1) verschiebbar ist.

8. Spritzgießmaschine nach Anspruch 7, dadurch gekennzeichnet,
daß die Führungseinheit mit Gleitflächen (40) den Schlitten zur Relativverschiebung der Antriebsvorrichtung (2) relativ zu dem Schneckenzylinder (1) bildet.

**Claims**

1. A process for removing the screw from the screw cylinder (1) of a screw-type injection moulding machine which has a drive device (2) arranged behind the screw cylinder (1) for axial displacement and rotary movement of the screw, wherein the screw cylinder (1) is released from the drive device (2), the screw cylinder (1) and the drive device (5) are axially displaced relative to each other by a predetermined distance (A) until the rear end of the screw has come free from the drive device (2) and thereupon the screw cylinder (1) is pivoted about a vertical pivot axis until the screw can be withdrawn rearwardly, characterised in that the pivotal movement of the screw cylinder (1) is about a pivot axis which is disposed approximately at the longitudinal centre of the screw cylinder.

2. A screw-type injection moulding machine having a base frame (5) for receiving an injection unit which comprises a screw cylinder (1), a screw which is rotatable and axially displaceable in the screw cylinder, and a drive device (2) for the screw, which is arranged axially behind the screw cylinder (1), wherein the screw cylinder (1) is releasably connected to the drive device (2), the screw cylinder (1) and the drive device (2) are arranged on the base frame (5, 12) axially displaceably relative to each other, and the screw cylinder (1) is mounted by means of a pivot mounting (6) which permits pivotal movement of the screw cylinder (1) about a vertical pivot axis until the rear end of the screw is accessible and the screw can be withdrawn rearwardly from the screw cylinder (1), characterised in that the vertical pivot axis formed by the pivot mounting (6) extends substantially at the longitudinal centre of the screw cylinder (1) and in a laterally displaced position with respect to the longitudinal axis of the screw cylinder, and that the rear end of the screw cylinder is connected to the drive device (2) and/or the base frame (5, 12) by way of a connecting member (4) having a laterally closable opening.

3. An injection moulding machine according to claim 2 characterised in that the screw cylinder is mounted on a carriage which is pivotable about a pivot mounting.

4. An injection moulding machine according to claim 2 or claim 3 characterised in that the pivot mounting (6) comprises an upwardly open fork-shaped receiving means (64) for the screw cylinder (1).

5. An injection moulding machine according to one of claims 3 and 4 characterised in that the carriage (8) is movable on its own longitudinal rails (10).

6. An injection moulding machine according to one of claims 3 to 5 characterised in that the screw cylinder (1) is mounted on a mounting plate (65) pivotably connected to the carriage (8) by the pivot mounting (6).

7. An injection moulding machine according to one of claims 2 to 6 characterised in that the connecting member (4), with an injection cylinder (21) of the drive device (2), forms a rigid guide unit with sliding surfaces (40) on which a transmission housing (23) of the drive device (2) is displaceable by the injection cylinder (21) in the axial direction of the screw cylinder (1).

8. An injection moulding machine according to claim 7 characterised in that the guide unit with sliding surfaces (40) forms the carriage for relative displacement of the drive device (2) relative to the screw cylinder (1).

**Revendications**

1. Procédé de démontage de la vis hors du cylindre de vis (1) d'une machine à injection à vis, qui présente un dispositif d'entraînement (2) agencé derrière le cylindre de vis (1) et prévu pour un déplacement axial et une rotation de la vis, procédé dans lequel le cylindre de vis (1) est détaché du dispositif d'entraînement (2), le cylindre de vis (1) et le dispositif d'entraînement (2) sont déplacés axialement l'un par rapport à l'autre sur une distance prédéterminée (A), jusqu'à ce que l'extrémité arrière de la vis soit libérée du dispositif d'entraînement (2), et le cylindre de vis (1) est amené à pivoter autour d'un axe de pivotement vertical suffisamment largement pour que la vis puisse être extraite vers l'arrière, caractérisé en ce que le pivotement du cylindre de vis (1) a lieu autour d'un axe de pivotement qui est situé approximativement au centre longitudinalement du cylindre de vis (1).

2. Machine à injection à vis, comprenant un châssis de base (5) pour recevoir une unité d'injection qui présente un cylindre de vis (1), une vis capable de tourner et de coulisser axialement dans le cylindre de vis et un dispositif d'entraînement (2) pour la vis, qui est agencé axialement derrière le cylindre de vis (1), machine dans laquelle le cylindre de vis (1) est relié de manière détachable au dispositif d'entraînement (2), le cylindre de vis (1) et le dispositif d'entraînement (2) sont agencés sur le châssis de base (5, 12) de manière à pouvoir être déplacés axialement l'un par rapport à l'autre, et le cylindre de vis (1) est supporté au moyen d'un support de pivotement (6) qui permet un pivotement du cylindre de vis (1) autour d'un axe de pivotement vertical dans une mesure suffisante pour que l'extrémité arrière de la vis soit accessible et que la vis puisse être extraite du cylindre de vis (1) vers l'arrière, caractérisée en ce que l'axe de pivotement vertical, formé par le support de pivotement (6), s'étend approximativement au centre longitudinalement du cylindre de vis (1) et d'une manière latéralement décalée par rapport à l'axe longitudinal du cylindre de vis et en ce que l'extrémité arrière du cylindre de vis est reliée au dispositif d'entraînement (2) et/ou châssis de base (5, 12) par l'intermédiaire d'une pièce de liaison (4) qui présente une ouverture obturable latéralement.

3. Machine à injection suivant la revendication 2, caractérisée en ce que le cylindre de vis est supporté sur un chariot qui est capable de pivoter autour d'un support de pivotement.

4. Machine à injection suivant l'une des revendications 2 et 3, caractérisée en ce que le support de pivotement (6) comporte un logement (64) en forme de fourche, ouvert vers le haut et prévu pour le cylindre de vis (1).

5. Machine à injection suivant l'une des revendications 3 et 4, caractérisée en ce que le chariot (8) est déplaçable sur des rails longitudinaux (10) propres.

6. Machine à injection suivant l'une des revendications 3 à 5, caractérisée en ce que le cylindre de vis (1) est supporté sur une plaque de montage (65) qui, par le support de pivotement (6), est relié de manière à pouvoir pivoter au chariot (8).

7. Machine à injection suivant l'une des revendications 2 à 6, caractérisée en ce que la pièce de liaison (4) forme avec un cylindre d'injection (21) du dispositif d'entraînement (2) une unité de guidage fixe à surfaces de glissement (40) sur lesquelles un carter des engrenages (23) du dispositif d'entraînement (2) peut être déplacé par le cylindre d'injection (21) suivant la direction axiale du cylindre de vis (1).

8. Machine à injection suivant la revendication 7, caractérisée en ce que l'unité de guidage à surfaces de glissement (40) forme le chariot pour le déplacement relatif du dispositif d'entraînement (2) par rapport au cylindre de vis (1).

# FIG.1

EP 0 345 253 B1

FIG.2

FIG.3

FIG.4

EP 0 345 253 B1

EP 0 345 253 B1

# FIG.5

# FIG.6

FIG.7

FIG.8